# EUROPÄISCHE PATENTSCHRIFT

(11) **EP 0 471 052 B1**
(45) Veröffentlichungstag und Bekanntmachung des Hinweises auf die Patenterteilung: **26.10.1994**
(21) Anmeldenummer: 91904643.3
(22) Anmeldetag: 25.02.1991
(51) Int. Cl.: B29C 55/16, D06C 3/02, B65G 39/20

(54) **VORRICHTUNG ZUM BREITSTRECKEN SOWIE FIXIEREN VON FOLIENBAHNEN**
DEVICE FOR STRETCHING AND FIXING SHEETING
DISPOSITIF DE MISE A LARGEUR ET DE FIXAGE DE FEUILLES MINCES

(30) Priorität: 01.03.1990 DE 4006440
(43) Veröffentlichungstag der Anmeldung: 19.02.1992
(73) Patentinhaber: Brückner Maschinenbau Gernot Brückner GmbH & Co. KG, 83313 Siegsdorf (DE)
(72) Erfinder: STEFFL, Manfred, D-8217 Grassau (DE)
(74) Vertreter: Flach, Dieter Rolf Paul, Dipl.-Phys.
(86) Internationale Anmeldenummer: EP9100346
(87) Internationale Veröffentlichungsnummer: WO9112952

(56) Entgegenhaltungen:
- EP-A- 0 206 317
- EP-A- 0 291 775
- FR-A- 1 464 892
- FR-A- 2 291 307
- US-A- 2 163 693

## Beschreibung

Die Erfindung betrifft eine aus der US-A-2163693 bekannte Vorrichtung zum Breitstrecken sowie Fixieren von Folienbahnen nach dem Oberbegriff des Anspruches 1.

Beispielsweise bei der Kunststoffolien-Herstellung wird die Folienbahn einer Breitstreckmaschine zugeführt, die symmetrisch zur Folienlängsrichtung jeweils seitlich eine Führungsschienenanordnung aufweist, längs derer eine mit Kluppen besetzte Transportkette umläuft. Die Transportkette wird in der Regel über ein vorderes wie hinteres, eine Umlenkung der Transportkette bewirkendes Kettenrad angetrieben bzw. umgelenkt.

Die Transportkette weist mit einem Rollenräderwerk versehene Kettenwagen auf, auf denen die Kluppen als Greifeinrichtung für die Folienbahn sitzen. Die Führungsschiene besteht in der Regel aus einem im Querschnitt rechteckförmigen Profil, so daß auf den so gebildeten gegenüberliegenden Laufflächen die mit vertikaler Achse ausgerichteten gegenüberliegend sitzenden oberen und unteren Laufrollen abrollen können.

Grundsätzlich sind auch Führungsschienen mit winkelig zur Horizontalen und/oder Vertikalen ausgerichteten Laufflächen möglich und bekannt.

Um einen reibungslosen Betrieb zu ermöglichen, ist der lichte Abstand zwischen den gegenüberliegend zu den beiden Laufflächen der Führungsschiene sitzenden Laufrollen zumindest geringfügig größer als die Dicke der Führungsschiene selbst. Mit anderen Worten ergibt sich dadurch ein Spiel von beispielsweise 0,3 bis 0,5 mm. Dieses Spiel ermöglicht also auch beim Kurvenlauf oder bei Toleranzabweichungen an der Führungsschiene selbst, daß es zu keiner Selbstblockade der Kette kommen kann.

Dieses Toleranzmaß aber hat naturbedingt zur Folge, daß bei vor allem zunehmend schnelleren Antriebsgeschwindigkeiten Vibrationen an der Transportkette auftreten können, die nicht nur zu einer beachtlichen Lärmbelästigung führen, sondern die darüber hinaus auch eine verstärkte Abnützung und Beeinträchtigung zur Folge haben und die maximal möglichen Antriebsgeschwindigkeiten nach oben hin begrenzen.

Aufgabe der vorliegenden Erfindung ist es von daher, eine Vorrichtung zum Breitstrecken sowie zum Fixieren von Folienbahnen zu schaffen, die die Nachteile nach dem Stand der Technik vermeidet und die vor allem gegenüber dem Stand der Technik sehr viel höhere Vorschub- und Antriebsgeschwindigkeiten für die Transportkette ohne nachteilhafte Folgen ermöglicht.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die erfindungsgemäße Vorrichtung besteht die Möglichkeit, derartige Transportketten mit gegenüber dem Stand der Technik sehr viel höheren Antriebsgeschwindigkeiten längs der Führungsschiene anzutreiben und zu bewegen, ohne daß es zu Vibrationen und zu den anderen geschilderten Nachteilen kommt. Erfindungsgemäß wird dies durch eine selbstwirkende Vorspanneinrichtung gewährleistet, mittels der zumindest eine auf einer Lauffläche der Führungsschiene ablaufende Laufrolle mit einer quer darauf gerichteten Vorspannkraft auf die Lauffläche zu vorgespannt wird. Dadurch läßt sich das im Stand der Technik vorhandene Toleranzspiel stets auf Null abbauen, so daß aufgrund der schwimmenden Anordnung des Kettenwagens auch die auf der gegenüberliegenden Lauffläche abrollenden Laufrollen stets voll anliegend an dieser Laufflächen der Führungsschiene gehalten werden.

Durch die Erfindung erfolgt diese Vorspannung zumindest teilweise durch eine Kettenhebelanordnung, worüber die einstellbare Laufrolle vorgespannt wird. Günstig ist vor allem eine gelenkig miteinander verbundene Kettenhebelanordnung, worüber auch die Zugkräfte der aneinander angelenkten Kettenwagen weitergeleitet werden können. Durch die Erfindung lassen sich zudem die Laufrollen-Vorspannkräfte einfach verändern und unterschiedlich einstellen, beispielsweise auch durch eine unterschiedliche Dickenwahl der Führungsschiene und der damit verbundenen Winkelverstellung an der die Laufrolle tragenden Kettenhebel. Mit anderen Worten kann die Führungsschiene sogar auf einem Umlauf an bestimmten Förderabschnitten mit unterschiedlicher Dicke ausgebildet sein, worüber an diesen betreffenden Förderabschnitten an den einstellbaren Laufrollen unterschiedlich vorwählbare Vorspannkräfte eingestellt werden können. Schließlich kann durch die unterschiedliche Dickenwahl der Führungsschiene auch eine Kompensation der Antriebskräfte über den Verlauf der Führungsschiene ermöglicht werden.

Bekanntermaßen wird die Kettenvorspannung durch entsprechende Justierung der Umlenk- oder Kettenräder eingestellt. Dazu wird in der Regel zumindest ein als Umlenkrad wirkendes Kettenrad hydraulisch vorgespannt, worüber die entsprechenden Kettenvorspannkräfte erzeugt werden. Durch entsprechende Veränderung der hydraulischen Vorspannung an zumindest einem Kettenrad und der darüber geänderten Kettenvorspannung lassen sich erfindungsgemäß dann auch - was besonders vorteilhaft ist - die Vorspannkräfte an den Laufrollen der einzelnen Kettenwagen einstellen. Dadurch läßt sich auch gezielt eine Steuerung durchführen. Soll beispielsweise die Antriebskette mit einer höheren Antriebskraft angetrieben werden, so kann beispielsweise die hydraulische Vorspannung an dem zumindest einen Kettenrad zurückgenommen und damit die Kettenvorspannkraft an sich auch so verringert werden, daß beispielsweise der Anpreßdruck der Laufrollen an der Führungsschiene immer konstant bleibt. Möglich wäre aber ebenso jede andere zielgerichtete Veränderung, beispielsweise in dem Sinne, daß einmal bei einer Veränderung hin zu einer höheren Antriebskraft gleichzeitig auch über das zumindest eine einstellbare Kettenrad höhere Ketten-Vorspannkräfte erzeugt werden, die dann zu erhöhten Rollenvorspannkräften an den einzelnen Kettenwagen führen.

Schließlich kann durch die Kinematik der Aufhängung des zumindest einen Kettenhebels, des Durchmessers sowie der Anordnung der einstellbaren Laufrolle selbst vor allem unter Berücksichtigung der Kettenhebelgestaltung vor allem auch im Hinblick auf eine vorwählbare Führungsschienendicke eine gewünschte Ausgangsgröße für die Vorspannkräfte voreingestellt werden. Durch Veränderung der vorstehend erläuterten Parameter läßt sich die Vorspannung der Kette und damit ferner unter Berücksichtigung der Antriebskräfte letztlich die Kettenspannung beeinflussen.

Durch die schwimmende Anordnung der Kettenwagen wird also durch jeweils zumindest eine einstellbare Laufrolle ein kontinuierlicher Laufrollenkontakt auf beiden gegenüberliegenden Laufflächen an der Führungsschiene gewährleistet. Durch diesen Effekt aufgrund der bestehenden Vorspannung des zumindest einen einstellbaren Laufrades wird ein Schlagen der Kette verhindert, wodurch auch ein sog. Hammereffekt zwischen den Laufrollen und der Laufschiene nicht mehr auftreten kann.

Weitere Vorteile können auch noch dadurch erzielt werden, daß beispielsweise an der einstellbaren Laufrollen selbst ein Anschlag für eine Maximalauslenkung vorgesehen ist.

Dieser Anschlag kann beispielsweise auch als Dämpfungs- oder Federelement ausgebildet sein. Sogar eine zusätzliche stetige Federvorspannung kann an jedem Kettenwagen vorgesehen sein, mit der die einstellbare Laufrolle zusätzlich druckbelastet wird.

Das erfindungsgemäße Prinzip läßt sich selbst im Bereich eines Kettenrades dann verwirklichen, wenn dort frei verschieblich zwischen den gegenüberliegend wirksamen Laufrollen ein schwimmend angeordnetes bogenförmiges Führungsschienenstück verwandt wird. Die Kettenspannung wird an den Umkehrkettenrädern über die Kettenbolzen aufgenommen, während die Laufrollen eine um die Kettenräder geführte und schwimmend gelagerte Laufschiene durch ihre vorspannende Wirkung und die richtige Position zum Kettenrad bringen.

Das erfindungsgemäße Prinzip läßt sich nicht nur bei einer Einschienen-, sondern auch beispielsweise bei einer Zweischienen-Anordnung für die Transportkette verwirklichen, da auch hier durch die erfindungsgemäße zumindest jeweils eine einstellbare Laufrolle eine aktuelle Abstandsanpassung an den lichten Abstand zwischen den beiden Führungsschienen vorgenommen werden kann, an denen an den in der Regel zugewandt liegenden Seiten die jeweiligen Laufflächen für die Laufrollen der Transportkette liegen. Das vorstehend Gesagte gilt auch nicht nur für den Fall einer sog. Einfachkette, sondern auch für den Fall einer sog. Doppelkette.

Weitere Vorteile, Einzelheiten und Merkmale der Erfindung ergeben sich nachfolgend aus den anhand von Zeichnungen dargestellten Ausführungsbeispielen. Dabei zeigen im einzelnen:
- Figur 1 :: eine schematische Draufsicht auf ein erstes Ausführungsbeispiel eines erfindungsgemäßen Kettenwagens;
- Figur 2 :: eine Abwandlung zu Figur 1;
- Figur 3 :: eine schematische Vertikalschnittdarstellung durch einen erfindungsgemäßen Kettenwagen;
- Figur 4 :: eine schematische Draufsicht auf ein weiteres Ausführungsbeispiel eines erfindungsgemäßen Kettenwagens;
- Figur 5 :: eine Abwandlung zu den vorausgegangenen Ausführungsbeispielen in vereinfachter Darstellung mit lediglich einem Kettenhebel;
- Figur 6 :: eine weitere Abwandlung zu Figur 5;
- Figur 7 :: ein weiteres Ausführungsbeispiel mit zwei einstellbaren Laufrollen;
- Figur 8 :: eine schematische Draufsicht auf ein Kettenrad mit einem als Führungsschiene schwimmend gelagerten Führungsbogen;
- Figur 9 :: eine auszugsweise Vertikalschnittdarstellung längs der Linie IX-IX in Figur 8.

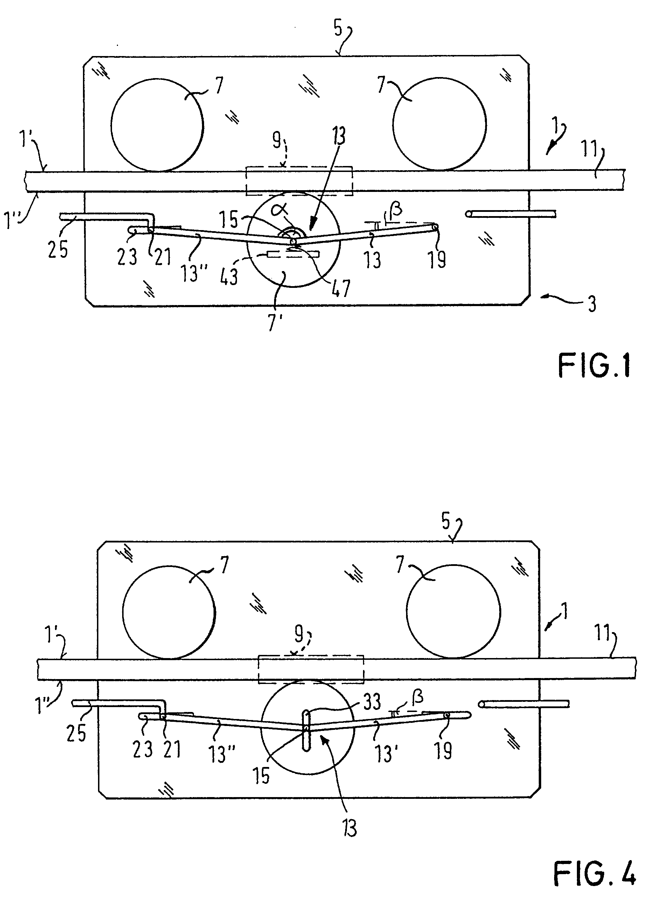

In Figur 1 ist ausschnittsweise in Draufsicht eine Führungsschiene 1 gezeigt, längs derer eine Transportkette verfahrbar ist. Im Falle einer Breitreckmaschine wird die zu behandelnde Folienbahn in der Regel links und rechts zur Vorschubrichtung der Folienbahn mittels an der Transportkette 3 ausgebildeten Kluppen ergriffen, wobei dann die Folienbahnen nacheinander einer Vorheizzone, einer Reckzone und einer Fixierzone zugeführt wird, bevor sie im Auslauf der Maschine von den Transportketten wieder freigegeben wird. Im eigentlichen Breitreckbereich laufen die Führungsschienen quer und symmetrisch zur Vorschubrichtung der Folien auseinander, um die Breitreckwirkung zu erzielen.

Die in Figur 1 in Draufsicht dargestellte Führungsschiene 1 weist dabei einen rechteckförmigen Querschnitt auf, so daß gegenüberliegend eine erste und zweite Lauffläche 1' bzw. 1'' gebildet wird.

Bei dem in Figur 1 schematisch gezeigten Ausführungsbeispiel laufen an der nach außen weisenden Lauffläche 1' zwei im Abstand zueinander am Kettenwagen 5 drehfest gelagerte Laufrollen 7 und an der gegenüberliegenden in der Figur 1 nicht näher dargestellten Folienbahn zuweisenden inneren Lauffläche 1'' eine weitere einstellbare Laufrolle 7' ab.

In der Regel sind jeweils tieferliegende weitere Laufrollen 7 bzw. 7' zur Aufnahme des Kippmomentes vorgesehen, worauf aber im folgenden nicht eingegangen wird.

Nur schematisch ist dargestellt, daß neben den vorstehend mit einer vertikalen Achse ausgerichteten Laufrollen 7 und 7' beispielsweise auch zumindest eine weitere mit einer horizontalen Drehachse ausgerichtete Laufrolle 9 vorgesehen sein kann, die auf der oberen horizontal ausgerichteten Lauffläche 11 zur Abstützung des Traggewichtes abrollt. Die in den Zeichnungen nicht näher dargestellten Kluppen liegen an den jeweiligen Kettenwagen, beispielsweise auf Seiten der einstellbaren Laufrollen 7', was aber nicht zwingend ist.

In der Ausführungsform gemäß Figur 1 ist die einstellbare Laufrolle 7' über zwei gelenkig miteinander verbundene Kettenhebel 13', 13'' getragen, die im folgenden auch als Kettenanordnung oder Kniehebel 18 bezeichnet werden, wobei die gemeinsame Gelenkachse 15 gleichzeitig als vertikal, d.h. parallel zur Lauffläche 1'' ausgerichtete Drehachse für die Laufrolle 7' dient. Der beispielsweise vorlaufende Kettenhebel 13' ist an seinem Abstützpunkt 19 unverschieblich drehbar gelagert. Der nachlaufende Kettenhebel 13'' ist an seinem nachlaufenden freien Ende an einem dort vorgesehenen Abstützpunkt 21 in einer Längsführung 23 längsverschieblich gelagert, wodurch eine nachfolgend noch im Detail erläuterte Kraftumlenkeinrichtung gebildet wird.

Ein benachbarter nachlaufender Kettenwagen 5 ist über einen Hebel 25 bevorzugt an dem Abstützpunkt 21 des nachlaufenden Kettenhebels 13 angelenkt. Nur zur besseren Darstellbarkeit ist der Kettenhebel 25 unmittelbar benachbart zum Abstützpunkt 21 mit einer Kröpfung versehen, so daß in der Zeichnung der Kettenhebel 25 ansonsten versetzt zur Längsführung zu liegen kommt. Ein benachbarter vorlaufender Kettenwagen 5 kann über einen weiteren entsprechenden Hebel 25 mit einem nächsten in Figur 1 dargestellten Kettenwagen 5 verbunden sein, um hierüber die über die Transportkette 3 eingeleiteten Zugkräfte zu übertragen. Bereits hier wird der Vollständigkeit halber angemerkt, daß der vorlaufende Hebel 25 beispielsweise an dem gemeinsamen Abstützpunkt 19 mit dem vorlaufenden Hebel 13' abgestützt ist.

Bei Einleitung der Antriebskräfte beispielsweise über ein nicht dargestelltes Kettenrad wird die nur ausschnittsweise dargestellte Transportkette 3 längs der Führungsschiene 1 vorwärts bewegt, wobei über die Kettenhebel 13 die Zugkräfte auf den jeweils nächsten Kettenwagen 5 weitergeleitet werden. Entsprechend der voreingestellten Winkelstellung α zwischen den jeweils beiden Kettenhebeln 13' und 13'' bei Anlage der Laufrollen 7 und 7' an den Laufflächen 1' und 1'' werden somit Vorspannkräfte der einschiebbaren Laufrolle 7' auf die zugehörige Lauffläche 1'' erzeugt, die nur von der Winkelstellung α und den Zugkräften abhängt.

Mit anderen Worten kann durch entsprechende Wahl der Breite der Führungsschiene 1, d.h. dem Abstand zwischen den Laufflächen 1' und 1'' eine winkelabhängige Ausgangsgröße für die Vorspannung der einstellbaren Laufrolle 7' gegenüber der zugehörigen Lauffläche 1'' gewählt werden, die dann in Abhängigkeit der Zugkräfte der Transportkette veränderbar ist.

Die erläuterte Kinematik ist unabhängig von der Zugrichtung der Transportkette 3 wirksam.

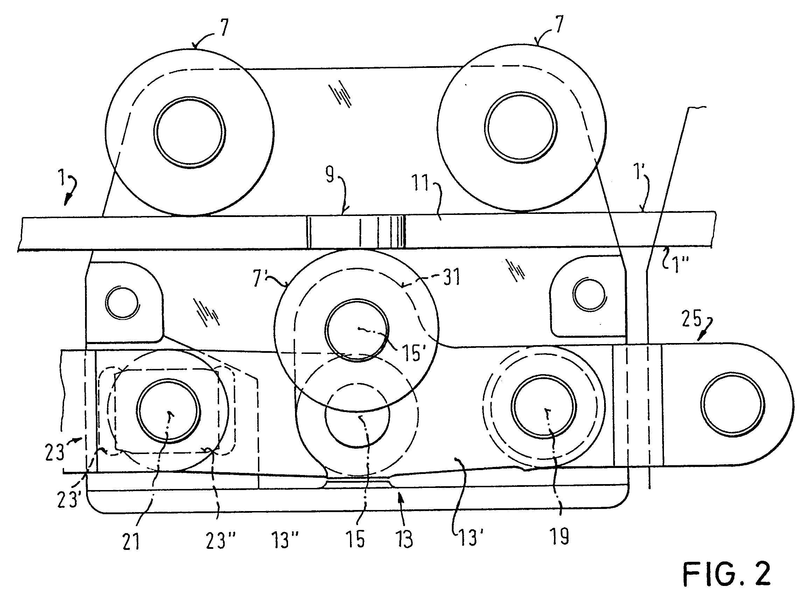

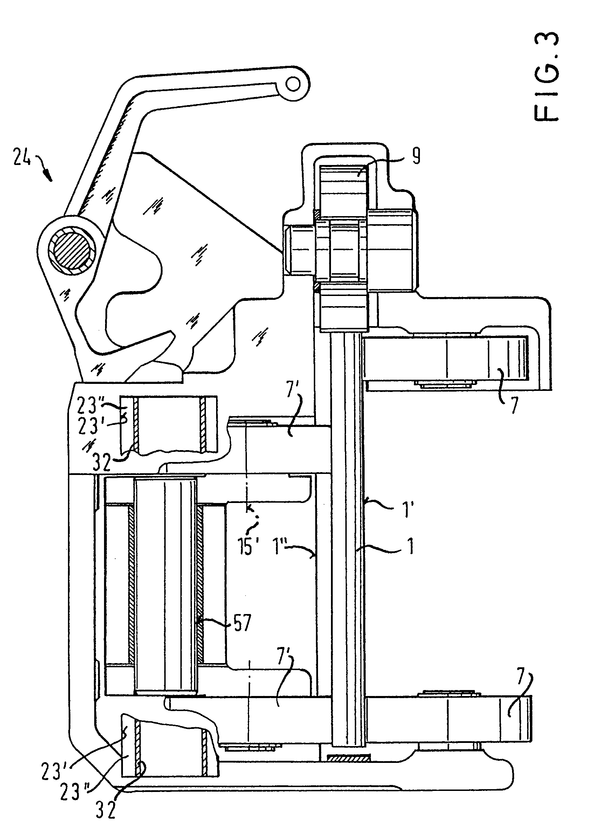

Anhand von Figur 2 und Figur 3 wird ein detaillierteres Ausführungsbeispiel mit einer Kluppe 24 erläutert.

Auch dort ist der sog. vorlaufende Kettenhebel 13' an dessen Abstützachse 19 abgestützt, an der auch ein weiterer ebenfalls drehbar abgestützter Verbindungshebel 25 angelenkt ist, der als Kettenverbindungsglied eine Verbindung zum benachbarten Kettenwagen herstellt.

Für die Längsführung 23 ist in einer Längsausnehmung 23' ein längsverschieblicher Schlitten 23'' gelagert, auf dem als Abstützpunkt 21 ein Drehbolzen sitzt.

Natürlich wird in der Praxis eine entsprechende Kettenhebelanordnung in zwei übereinander liegenden Ebenen angeordnet sein, ebenso wie in der Regel gemäß Figur 3 weitere Laufrollen 7 und 7' in einer weiteren Höhenebene zur Führungsschiene 1 vorgesehen sind.

Schließlich wird aus Figur 2 auch ersichtlich, daß die Drehachse der einstellbaren Laufrolle 7' nicht mit der Gelenkachse 15 übereinstimmen muß. Dort ist über einen Winkelansatz 31 die Drehachse 15' der einstellbaren Laufrolle 7' gehalten.

In der Vertikalschnittdarstellung quer zur Führungsschiene 1 gemäß Figur 3 ist das frei tragende Gelenk 15 mit dem Winkelansatz 31 und der dort um die Drehachse 15' drehbar gelagerten oberen und unteren Rolle 7' ersichtlich.

In einer teilweise versetzt dazu liegenden Schnittebene ist in der Längsausnehmung 23' der in einer Buchse 32 im Schlitten 23'' gelagerte Schlitte ersichtlich.

Bei dem Ausführungsbeispiel gemäß den Figuren 1 bis 3 ist also die nach Art eines Kniehebels 13 ausgebildete Doppel-Kettenhebel-Anordnung an einem beispielsweise durch einen Drehbolzen gebildeten Abstützpunkt 19 gegenüber dem Kettenwagen 5 ortsfest und an einem zweiten ebenfalls einen Gelenkbolzen darstellenden weiteren Abstützpunkt 21 mit einem Freiheitsgrad in Längsrichtung parallel zur Führungsschiene (oder mit einer im wesentlichen in dieser Richtung verlaufenden Bewegungskomponente) bewegbar geführt ist, wobei die nach Art eines Kniegelenkes gebildete Gelenkachse 15 freitragend angeordnet ist.

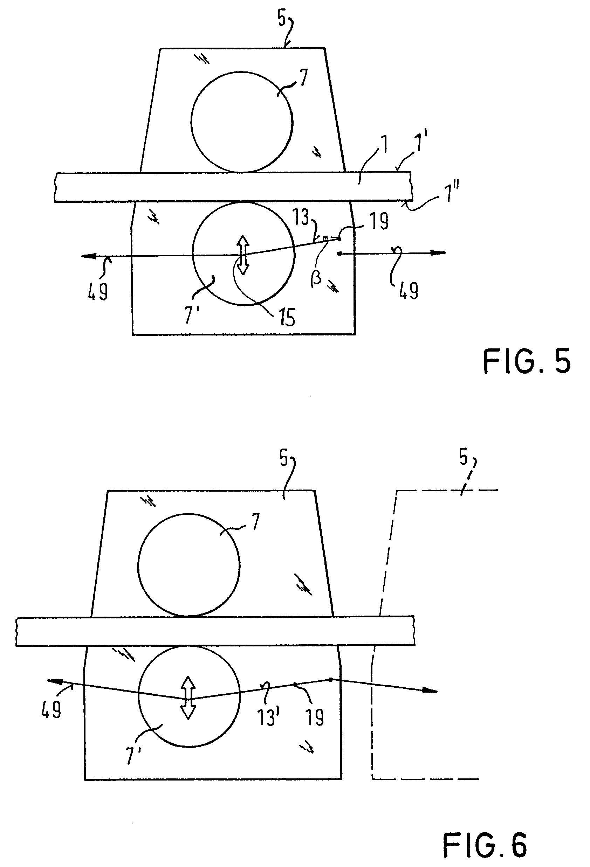

Davon unterscheidet sich das Ausführungsbeispiel gemäß Figur 4 dadurch, daß die jeweils gegenüberliegenden Abstützpunkte 19 bzw. 21 der Kniegelenkhebel-Anordnung 13', 13'' jeweils in einer Bewegungsrichtung in Längsrichtung (oder mit einer im wesentlichen so verlaufenden Bewegungskomponente mit einem Freiheits grad) verschiebbar gelagert und gehalten sind, wohingegen das die Gelenkachse 15 bildende Kniegelenk lediglich in einer Richtung senkrecht zur Führungsschiene (oder mit einer im wesentlichen so ausgerichteten Bewegungskomponente) verschiebbar abgestützt ist. Ein entsprechender in eine Querführung 33 eingreifender Zapfen kann dabei ebenfalls von der Gelenkachse 15 getrennt ausgebildet sein und auch in Draufsicht versetzt dazu liegen.

Wie in den Zeichnungen nicht näher dargestellt ist, können abweichend von den erläuterten Längsführungen 23 bzw. Querführungen 33 auch andere Führungselemente realisiert werden, die beispielsweise aus einem am Kettenwagen 5 um eine Achse verschwenkbaren Lenker bestehen. So könnte beispielsweise in der Figur 1 ein derartiger nicht dargestellter Lenker im Bereich der Drehachse der in Figur 1 an der Lauffläche 1' abrollenden links liegenden Laufrolle 7 in Verlängerung der zugehörigen Drehachse angelenkt sein, so daß das freie Ende dieses Lenkers den Abstützpunkt 19 für den nachlaufenden Kettenhebel 13' bildet.

In dem zuletzt genannten Falle würde also beispielsweise der Abstützpunkt 21 auf einer Kreisbogenbahn mit einem Freiheitsgrad entsprechend der sich verändernden Winkelstellung α bewegt werden, wobei allerdings in Anbetracht der Geringfügigkeit der absoluten Verschiebungswege, die im Zehntelmillimeterbereich liegen, hier faktisch kaum Unterschiede zu einer echten Linearbewegung feststellbar sind.

Die Abweichung des zwischen den beiden Kettenhebeln 13' und 13'' gebildeten Winkels α von der 180° Erstreckung kann beispielsweise weniger als 5°, vorzugsweise weniger als 4°, 3° oder insbesondere auch weniger als 2° betragen. Selbst Winkel von weniger als 1° sind immer noch als günstig zu bezeichnen, wobei selbst Werte von mindestens 0,2°, 0,25° und vor allem 0,3°, 0,4° und über 0,5° günstig sind. Als Kernbereiche haben sich Winkelwerte zwischen 0,5° bis 1° bzw. 1,5° als besonders günstig erwiesen.

Anstelle der vorstehend erläuterten, gegebenenfalls nur im wesentlichen mit Längskomponente oder nur mit Querkomponente zur Führungsschiene verfahrbaren Abstützachsen 19 bzw. 21 können in bestimmten Einsatzfällen auch winkelig zur Laufschiene verlaufende Führungs- und Verstellwege vorgesehen sein.

Schließlich ist in Figur 1 schematisch angezeigt, daß am Kettenwagen auch noch ein Anschlag 43 ausgebildet sein kann, der die Verschwenkbewegung entgegengesetzt zur Vorspannrichtung für die Laufrolle 7' beschränkt. Dieser Anschlag kann auch als Dämpfungselement oder als Federeinrichtung ausgebildet sein, worüber sogar eine zusätzliche ständige Vorspannkraft zu der über die Winkelstellung und die Zugkräfte ansonsten eingeleitete Vorspannkräfte aufaddiert worden.

Abweichend von den gezeigten Ausführungsbeispielen können beispielsweise auch weitere einstellbare Laufrollen 7' in Längsrichtung des zugehörigen Kettenwagens 5 versetzt liegend angeordnet sein. Für jedes dieser einstellbaren Laufräder 7' kann eine gleiche Abstützeinrichtung vorgesehen sein. Dabei ist auch möglich, daß beispielsweise bei Figur 1 der dort gezeigte Abstützpunkt 19 an einem Schlitten einer Längsführung eines benachbarten einstellbaren Laufrades am gleichen Kettenwagen abgestützt ist, so daß eine verkettete Hintereinanderanordnung zweier versetzt zueinander angeordneter Laufräder 7' erzielt wird.

Ebenso wäre auch eine spiegelbildliche Anordnung dergestalt möglich, daß der Abstützpunkt 19, wie im Beispiel gemäß Figur 1 am Kettenwagen 5 fest verankert wäre, um welche jeweils der Kettenhebel 13' des in Figur 1 gezeigten einstellbaren Laufrades 7' und eines weiteren dazu spiegelbildlich angeordneten einstellbaren Laufrades 7', also in Figur 1 rechtsliegend, ebenfalls abgestützt wäre. Dieses zweite in Figur 1 nicht dargestellte einstellbare Laufrad 7' wäre dann rechtsliegend in einer Längsführung abgestützt. Natürlich können in diesem Falle auch getrennte Abstützpunkte 19 vorgesehen werden.

In Figur 5 ist gegenüber den vorausgegangenen Ausführungsbeispielen eine vereinfachte Variante gezeigt, auf die nachfolgend eingegangen wird.

Bei dem in Figur 5 verdeutlichten Kettenwagen 5 können eine oder mehrere nicht einstellbare Gegen-Laufrollen 7 vorgesehen sein. Unabhängig davon ist ebenfalls nur eine einstellbare Laufrolle (oder zwei übereinander angeordnete Laufrollen, die aber hier nur im Sinne einer Laufrolle verstanden werden) vorgesehen, wobei als Kraftumlenkeinrichtung nicht ein Kniehebel, sondern lediglich ein einziger Kettenhebel 13 vorgesehen ist, der an der Abstützachse 19 gegenüber dem Kettenwagen drehbeweglich aber unverschieblich abgestützt ist, und der bevorzugt an seinem freien Ende die über den Kettenhebel 13 verschwenkbare einstellbare Laufrolle 7' trägt. Bevorzugt am freien Ende des Kettenhebels oder an einer anderen auf jeden Fall zur Abstützachse 19 versetzt liegenden Angriffsstelle ist ein hebelförmiges Verbindungs- und Zugorgan 49 angelenkt, welches die Verbindung zu einem nachfolgenden Kettenwagen 5 herstellt, an dem es ebenfalls angelenkt ist.

Im Gegensatz zu den Ausführungsformen nach den Figuren 1 bis 4 wird also hierdurch eine vereinfachte Variante mit nur einem einzigen Kettenhebel 13 realisiert. Die erläuterte Ausführungsform ist unabhängig von der Zugrichtung der Kettenwagen wirksam. Auf jeden Fall ist der spitze Winkel β zwischen dem von der Laufrolle wegführenden Kettenhebel 13'' und einem Parallelvektor zur Richtung der Führungsschiene 1 so gewählt, daß aufgrund des größeren Abstandes zwischen der zugehörigen Lauffläche 1'' und dem Drehpunkt 15 der einstellbaren Laufrolle 7' gegenüber dem Abstand zwischen der Drehachse 19 und der zugehörigen Lauffläche 1'' stets Vorspannkräfte in Richtung der Lauffläche 1'' erzeugt werden.

Anhand von Figur 6 wird nur schematisch in Abwandlung zu Figur 5 erläutert, daß der Kettenhebel 13' auch gegenüber seiner Dreh- und Abstützachse 19 hinaus verlängert sein kann, und daß hier über ein hebelförmiges Verbindungs- und Zugorgan 49 die Verbindung zu einem benachbarten Kettenwagen 5 herstellbar ist.

Bei in diesem Ausführungsbeispiel entgegengesetzt zur Figur 5 eingeleiteten Zugkräften erfolgt durch die wippenartige Abstützung der Mitte eine gleichgerichtete Vorspannbewegung der einstellbaren Laufrolle 7' auf die zugehörige Lauffläche.

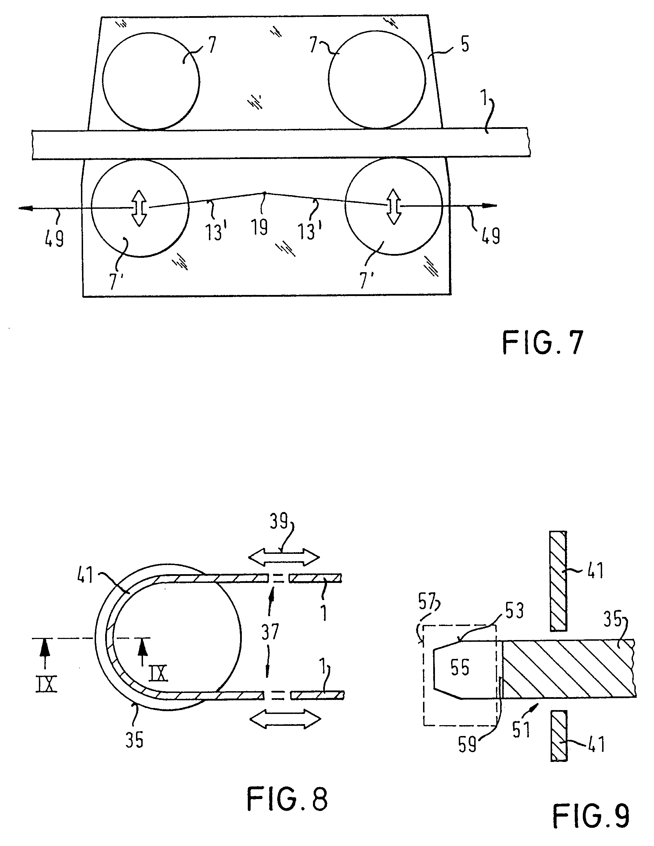

Auch bei den vorstehend erläuterten Ausführungsbeispielen kann eine beliebige Ausdehnung auf mehrere in Laufrichtung versetzt liegende einstellbare Laufrollen 7' erfolgen, wie ebenfalls nur rein schematisch anhand von Figur 7 erläutert wird. Die gemeinsame Anlenk- und Abstützachse 19 kann auch getrennt ausgebildet sein, wobei die Zahl der Gegen-Laufrollen 7 wieder beliebig gewählt werden kann.

Diese Ausführungsform gemäß Figur 7 erweist sich in der Praxis, ähnlich wie die Ausführungsform gemäß den Figuren 1 bis 4, als besonders günstig. Denn auch hier erfolgt eine Abstützung in Draufsicht an zumindest zwei, im konkreten bei Figur 7 an vier versetzt zueinander liegenden Stellen an der Führungsschieneneinrichtung, so daß auch dadurch durch den Kettenwagen Dreh- und und Kippkräfte optimal aufgenommen und abgestützt werden.

Die Ausführungsformen gemäß den Figuren 5 bis 7 können aber in Anlehnung zu den Ausführungsformen gemäß den Figuren 1 bis 4 auch so verstanden und interpretiert werden, daß die Kraftumlenkeinrichtung auch hier einen aus einem Kettenhebel 13' und einem hebelförmigen Verbindungs- und Zugorgan 49 gebildeten Kniehebel besteht, der beispielsweise an der Abschnittsachse 49 am zugehörigen Kettenwagen 5 ortsfest und drehbeweglich abgestützt und am gegenüberliegenden Ende des Kniehebels bereits am nächsten Kettenwagen 5 ebenfalls drehbeweglich abgestützt ist. Das dazwischen befindliche Kniegelenk mit der Laufrolle 7' ist dann einstellbar bewegbar. Da in diesem Fall die eine drehbewegliche Abstützung des Kniehebels am nächsten Kettenwagen 5 erfolgt, kann hier durch eine geringfügige Distanzänderung zwischen zwei benachbarten Kettenwagen eine längsverschiebliche Abstützung des in Figur 6 links liegenden Endes des Kniehebels 13, 49 erzielt werden, die vom Prinzip her der in Figur 1 wiedergegebenen Darstellung und Kinematik entspricht. In Figur 1 ist also abweichend lediglich an dieser längsverschieblichen Abstützachse 21, die am gleichen Kettenwagen 5 liegt, ein weiterer separater Verbindungs-Hebel 25 zu einem benachbarten Kettenwagen 5 angelenkt.

Anhand von Figur 8 und 9 wird noch auf die Umlenkung einer vorstehend erläuterten Transportkette 3 mit Hilfe eines Kettenrades 35 eingegangen.

In Figur 8 ist in schematischer Draufsicht ein Kettenrad 35 ohne weitere Darstellung der Kettenzähne und Zahnlücken gezeigt. Um das Kettenrad 35 herum ist ein schwimmender Führungsbogen 41 als Führungsschiene dargestellt, der an seinen Ansatzstützen 37 gemäß der Pfeildarstellung 39 verschieblich gelagert ist. Die Anpassung erfolgt so, daß die Kettenwagen über diese Anpaßstellen problemlos darüberfahren können.

Vor allem auch aus der Vertikalschnittdarstellung gemäß Figur 9 ist ersichtlich, daß das bogenförmige Führungsstück eine Ausnehmung 51 im mittleren Bereich aufweist, durch welche hindurch das Kettenrad 35 ragt und vor allem im mittleren Bereich des Führungsbogens 41 am weitestens übersteht.

Die Kettenzähne 53 sowie die zwischen zwei Kettenzähnen gebildeten Zahnlücken 55 ergreifen dann die am Kettenwagen 5 vorgesehenen Kettenbolzen, die als Hülsenteile beispielsweise, aber nicht zwingend, in axialer Verlängerung der in Figur 1 dargestellten ortsfesten Abstützachse 19, der Gelenkachse 15 sowie der in Längsrichtung verschieblichen Gelenk- und Abstützachse 21 zwischen jeweils zwei äußeren oder inneren Kettengliedern liegen und zwischen denen Ausnehmungen gebildet sind, durch welche hindurch die Kettenzähne 53 ragen können. In Figur 3 und 9 ist beispielsweise der Kettenbolzen 57 gezeigt. Um Verspannungen zu vermeiden, hat diese mit der einstellbaren Laufrolle an einem Kettenhebel 13 gehaltene Kettenbolzen 57, auch Spannrolle genannt, Luft 59 zum Fußkreis des Kettenrades, während die weiteren am Kettenwagen ausgebildeten Kettenbolzen beispielsweise, aber nicht zwingend, in axialer Verlängerung feststehenden Abstützachse 19, wie auch der beispielsweise lediglich in Längsrichtung verschieblich in einem Schlitten geführten Abstützachse 21, auch am Fußkreis mit dem Kettenrad 35 in Kontakt stehen können.

Durch diese Anordnung wird die Kettenspannung an den Umkehr-Kettenrädern über die Kettenbolzen aufgenommen, während die Laufrollen einer um die Kettenräder geführte und schwimmend gelagerte Ausführungsbogen 41 ausgebildete Laufschiene durch ihre vorspannende Wirkung und die richtige Position zum Kettenrad 35 bringen.

## Patentansprüche

1. Vorrichtung zum Breitstrecken sowie Fixieren von Folienbahnen mit einer umlaufenden Transportkette (3), bestehend aus gelenkig miteinander verbundenen und über ein Rollenlaufwerk gegenüber einer zumindest eine Führungsschiene (1) umfassenden Führungseinrichtung abgestützten und längs dieser verfahrbaren Kettenwagen (5), wobei zumindest je eine Laufrolle (7) auf entgegengesetzt ausgerichteten Laufflächen (1', 1'') der Führungsschieneneinrichtung (1) abrollen, **dadurch gekennzeichnet**, daß zumindest eine dieser Laufrollen (7') gegenüber dem Kettenwagen (5) in Querrichtung zur Führungsschiene (1) unter stetiger Vorspannung lageveränderlich und damit aufgrund der schwimmenden Anordnung des Kettenwagens auch die an der entgegengesetzt ausgerichteten Lauffläche (1') abrollenden Laufrollen (7) in steter Anlage an den jeweils zugehörigen Laufflächen (1', 1'') gehalten werden, wozu auf dem Kettenwagen (5) zumindest eine im wesentlichen auf die zugehörige Lauffläche (1', 1'') zu einstellbare Laufrolle (7') sowie eine Kraftumlenkeinrichtung vorgesehen sind, mittels derer die im wesentlichen in Laufrichtung wirksame und durch die von einem auf einen nächsten Kettenwagen (5) übertragenen Zugkräfte beeinflußte Kettenspannung in eine im wesentlichen quer auf die zugehörige Lauffläche (1', 1'') zu gerichtete und die zumindest eine einstellbare Laufrolle (7') druckbeaufschlagende Vorspannkraft umgelenkt wird.

2. Vorrichtung nach Anspruch 1, **dadurch gekennzeichnet**, daß die Kraftumlenkeinrichtung zumindest einen gelenkig am Kettenwagen (5) gelagerten und die einstellbare Laufrolle (7') zumindest mittelbar verschwenkbar führenden Kettenhebel (13') umfaßt, an welchem die Zugkräfte angreifen.

3. Vorrichtung nach Anspruch 2, **dadurch gekennzeichnet**, daß der zumindest eine Kettenhebel (13') am Kettenwagen (5) drehbar gelagert und von seiner eine Drehachse bildenden Abstützachse (19) in einem spitzen Winkel (β) von der Lauffläche (1', 1'') weglaufend ausgerichtet ist.

4. Vorrichtung nach Anspruch 2 oder 3, **dadurch gekennzeichnet**, daß am Kettenhebel (13') zu dessen Abstütz- und Drehachse (19) versetzt liegend ein Verbindungs- und Zugorgan (25, 49) angreift, worüber zumindest mittelbar eine Zugverbindung zu einem nach- oder vorlaufenden benachbarten Kettenwagen (5) besteht.

5. Vorrichtung nach einem der Ansprüche 2 bis 4, **dadurch gekennzeichnet**, daß der zumindest eine Kettenhebel (13') zur zugehörigen Lauffläche (1', 1'') einen spitzen Winkel (β) zwischen 0,1° bis 10°, vorzugsweise von zumindest 0,2°, 0,3°, 0,4° und insbesondere 0,5° und von vorzugsweise weniger als 7,5°, 5°, 4°, 3°, 2°, 1,5° oder insbesondere 1° bildet.

6. Vorrichtung nach einem der Ansprüche 2 bis 5, **dadurch gekennzeichnet**, daß der Kettenhebel (13') am zugehörigen Kettenwagen (5) lediglich über eine unverschiebliche Dreh- und Abstützachse (19) gehalten und gelagert ist.

7. Vorrichtung nach einem der Ansprüche 2 bis 5, **dadurch gekennzeichnet**, daß der Kettenhebel (13) am zugehörigen Kettenwagen (5) an zwei versetzt zueinander liegenden Abstützachsen (19, 15) jeweils mit einem Freiheitsgrad einmal im wesentlichen mit einer Längskomponente in Richtung der Führungsschiene (1) und zum anderen mit einer Komponente im wesentlichen quer zur zugehörigen Lauffläche (1'') der Führungsschiene (1) beweglich abgestützt ist.

8. Vorrichtung nach einem der Ansprüche 1 bis 7, **dadurch gekennzeichnet**, daß die Kraftumlenkeinrichtung zumindest jeweils zwei gelenkig miteinander verbundene, einen Kniehebel (13) ergebende Kettenhebel (13', 13'') umfaßt, worüber die einstellbare Laufrolle (7') einstellbar ist.

9. Vorrichtung nach Anspruch 8, **dadurch gekennzeichnet**, daß der Kniehebel (13; 13', 13'') der zugehörigen Lauffläche zu liegend einen stumpfen Öffnungswinkel (α) bildet, der größer als 170° ist, wobei der Kniehebel durch die eingeleiteten Zugkräfte in Öffnungsrichtung zugbelastet und damit die einstellbare Laufrolle (7') in Vorspannrichtung auf die Führungsschiene (1) zu vorgespannt ist.

10. Vorrichtung nach Anspruch 8, **dadurch gekennzeichnet**, daß der Kniehebel (13; 13', 13'') der zugehörigen Lauffläche zu liegend einen überstumpfen Öffnungswinkel bildet, der kleiner als 190° ist, wobei der Kniehebel durch die eingeleiteten Zugkräfte in Richtung seiner 180°-Längserstreckung zugbelastet und damit die einstellbare Laufrolle (7') in Vorspannrichtung auf die Führungsschiene (1) zu vorgespannt ist.

11. Vorrichtung nach einem der Ansprüche 8 bis 10, **dadurch gekennzeichnet**, daß der Kniehebel (13; 13', 13'') mit einem seiner beiden Kettenhebel (13', 13'') am zugehörigen Kettenwagen (5) lediglich drehbeweglich und mit seinem jeweils anderen Kettenhebel (13'' bzw. 13') mit einem Freiheitsgrad im wesentlichen mit einer Längskomponente verschieblich gelagert ist, wobei die Gelenkachse (15) und damit die Achse des einstellbaren Laufrades (7') freitragend ist.

12. Vorrichtung nach einem der Ansprüche 8 bis 10, **dadurch gekennzeichnet**, daß der Kniehebel (13; 13', 13'') an seinen beiden Kettenhebeln (13', 13'') jeweils mit einem Freiheitsgrad im wesentlichen mit einer Längskomponente in Richtung der Führungsschiene (1) am zugehörigen Kettenwagen (5) längsverschieblich und mit einem dritten Abstützpunkt (15, 15'), vorzugsweise der Gelenkachse (15), lediglich in einer Komponente im wesentlichen quer zur zugehörigen Lauffläche (1'') der Führungsschiene (1) mit einem Freiheitsgrad beweglich abgestützt ist.

13. Vorrichtung nach einem der Ansprüche 2 bis 12, **dadurch gekennzeichnet**, daß die Abstützachsen (19, 21) des Kniehebels (13', 13'') durch Drehbolzen gebildet sind.

14. Vorrichtung nach einem der Ansprüche 2 bis 13, **dadurch gekennzeichnet**, daß der jeweils verschieblich gelagerte Kettenhebel (13', 13'') in einem Schlitten (23'') drehbeweglich vorzugsweise mittels eines Bolzens gelagert ist, wobei der Schlitten (23'') in einer Längsausnehmung (23') im zugehörigen Kettenwagen (5) verschieblich gelagert ist.

15. Vorrichtung nach Anspruch 14, **dadurch gekennzeichnet**, daß der Schlitten (23'') einen Gleitstein umfaßt.

16. Vorrichtung nach einem der Ansprüche 8 bis 15, **dadurch gekennzeichnet**, daß die Drehachse der einstellbaren Laufrolle (7') mit der Gelenkachse (15) des Kniehebels (13', 13'') zusammenfällt.

17. Vorrichtung nach einem der Ansprüche 2 bis 15, **dadurch gekennzeichnet**, daß die Drehachse (15') der einstellbaren Laufrolle (7') versetzt zur Gelenkachse (15) des Kniehebels (13; 13', 13'') liegt.

18. Vorrichtung nach Anspruch 17, **dadurch gekennzeichnet**, daß an einem Kettenhebel (13', 13'') ein Winkelansatz (31) ausgebildet ist, an welchem die einstellbare Laufrolle (7') abgestützt und gehalten ist.

19. Vorrichtung nach Anspruch 18, **dadurch gekennzeichnet**, daß der Winkelansatz (31) und damit die Drehachse der einstellbaren Laufrolle (7') näher auf die zugehörige Lauffläche (1'') der Führungsschiene (1) liegt als die Gelenkachse (15) des Kniehebels (13', 13'').

20. Vorrichtung nach einem der Ansprüche 8 bis 19, **dadurch gekennzeichnet**, daß die Abweichung des Winkels (α) von der 180°--Erstreckung vorzugsweise mehr als 0,2° und weniger als 5°, insbesondere mehr als 0,3°, 0,4° und insbesondere 0,5° und insbesondere weniger als 4°, 3°, 2° und insbesondere 1,5° oder 1° beträgt.

21. Vorrichtung nach einem der Ansprüche 2 bis 20, **dadurch gekennzeichnet**, daß der Verschwenkbereich des zumindest einen Kettenhebels (13, 13', 13'') entgegengesetzt zur Vorspannrichtung durch einen Anschlag (43), insbesondere ein Dämpfungselement, begrenzt ist.

22. Vorrichtung nach einem der Ansprüche 2 bis 20, **dadurch gekennzeichnet**, daß der zumindest eine Kettenhebel (13, 13', 13'') in Vorspannrichtung zusätzlich über eine am Kettenwagen (5) vorgesehene Federeinrichtung (47) zusätzlich in Vorspannrichtung auf die Lauffläche (1'') zugespannt ist.

23. Vorrichtung nach einem der Ansprüche 2 bis 22, **dadurch gekennzeichnet**, daß der die Vorspannkräfte beeinflussende spitze Winkel (β) des zumindest einen Kettenhebels (13) zur Richtung der Lauffläche (1', 1'') bzw. des Kniehebels (13', 13'') durch entsprechende Anordnung der Abstützachsen, der Drehachse der einstellbaren Laufrolle (7') sowie deren Durchmesser durch die Form und Größe des zumindest einen Kettenhebels (13, 13', 13'') sowie die Dicke der Führungsschiene (1) voreinstellbar ist.

24. Vorrichtung nach einem der Ansprüche 1 bis 23, **dadurch gekennzeichnet**, daß der Abstand der Laufflächen (1', 1'') und damit insbesondere die Dicke der Führungsschiene (1) und/oder die Kettenvorspannkräfte und/oder die Antriebskräfte der Kette zur Erzielung unterschiedlicher Laufrollen-Vorspannkräfte variierbar ist bzw. sind.

25. Vorrichtung nach einem der Ansprüche 1 bis 24, **dadurch gekennzeichnet**, daß in jedem Kettenwagen (5) zumindest zwei auch in Laufrichtung versetzt zueinander liegende Laufrollen (7') einstellbar sind, wobei die jeweils weitere einstellbare Laufrolle (7') separat in Laufrichtung versetzt und entsprechend am Kettenwagen (5) oder in einer Art Tandemanordnung in verketteter Hintereinanderanordnung oder in quasi spiegelbildlicher verketteter Hintereinanderanordnung vorgesehen ist.

26. Vorrichtung nach einem der Ansprüche 1 bis 25, **dadurch gekennzeichnet**, daß im Bereich eines Kettenrades (35) zwischen den gegenüberliegend zusammenwirkenden Laufrollen (7, 7') ein schwimmender am Übergang zur geraden Führungsschiene (1) verschieblicher Führungsbogen (41) zur Aufnahme und Übertragung der Abstützkräfte auf das Kettenrad (35) vorgesehen ist.

## Claims

1. A device for the crosswise stretching and fixing film webs comprising a circulating conveying chain (3), consisting of articulatedly mutually connected chain carriages (5), which are supported by a roller system with respect to a guide device having at least one guide rail (1) and adapted to travel along the same, at least one respective roller (7) running on oppositely aligned support surfaces (1' and 1'') on the guide rail device (1), characterized in that at least one these rollers (7') is able to be changed in position in the transverse direction in relation to the guide rail (1) with a continuous pre-stress and consequently owing to the floating arrangement of the chain carriage furthermore the rolls (7), which run on the oppositely aligned support surface (1'), in constant engagement with the respectively associated support surfaces (1' and 1''), for which purpose at least one adjustable roller (7') and at least one force re-directing means are provided on the chain carriage (5), said adjustable roller being able to be adjusted essentially toward the associated support surface (1' and 1''), and by means of said force re-directing means the chain tension acting essentially in the direction of travel and affected by the tension forces transmitted by one chain carriage to the next chain carriage (5) is re-directed into a pre-stress force directed toward essentially transversely in relation to the associated support surface (1' and 1'') and thrusting against the at least one adjustable roller (7').

2. The device as claimed in claim 1, characterized in that the force re-directing device comprises at least one chain lever (13'), which is pivotally mounted on the chain carriage (5) and bears the adjustable roller (7') in an at least indirectly pivotal manner, said tension forces acting on said chain lever.

3. The device as claimed in claim 2, characterized in that the at least one chain lever (13') is rotatably mounted on the chain carriage (5) and is aligned to extend away from its support pin (19), which constitutes an axis of rotation, at an acute angle (β) away from the support surface ('1 and 1'').

4. The device as claimed in claim 2 or in claim 3, characterized by a connecting and traction member (25 and 49) engaging the chain lever (13') and offset in relation to its supporting pin (19) of rotation and by means of which there is an at least indirect traction connection with a following or preceding, adjacent chain carriage (5).

5. The device as claimed in any one of the claims 2 through 4, characterized in that with respect to associated support surface (1' and 1'') the at least one chain lever (13') forms an acute angle (β) of between 0.1° and 10°, preferably of at least 0.2°, 0.3°, 0.4° and more particularly 0.5° and more especially less than 7.5°, 5°, 4°, 3°, 2° 1.5° or more particularly 1°.

6. The device as claimed in any one of the claims 2 through 5, characterized in that the chain lever (13') is only held and bearinged by means of one fixed supporting and pin (19) of rotation.

7. The device as claimed in any one of the claims 2 through 5, characterized in that the chain lever (13) is movably carried on the associated chain carriage (5) at two mutually offset support axes (15 and 19) with respectively one degree of freedom on the one hand essentially with a longitudinal component in the direction of the guide rail (1) and on the other hand with a component essentially transversely to associated support surface (1'') of the guide rail (1).

8. The device as claimed in any one of the claims 2 through 7, characterized in that the force re-directing means comprises respectively two chain levers (13 and 13'') connected together in an articulated fashion and acting as a toggle lever (13), by means of which the adjustable roller (7') can be adjusted.

9. The device as claimed in claim 8, characterized in that the toggle lever (13; 13' and 13'') forms an obtuse angle (α) opening toward the associated support surface and in excess of 170°, the toggle lever being loaded by the tension forces acting thereon in the opening direction and accordingly the adjustable roller (7') is biased toward the guide rail (1).

10. The device as claimed in claim 8, characterized in that the toggle lever (13; 13' and 13'') forms a reflex angle (α) opening toward the associated support surface and smaller than 190°, the toggle lever being loaded by the tension forces acting thereon toward its extended, 180° position and accordingly the adjustable roller (7') is biased toward the guide rail (1).

11. The device as claimed in any one of the claims 8 through 10, characterized in that the toggle lever (13; 13' and 13'') is only rotatably mounted with one of its two chain levers (13' and 13'') on the associated chain carriage (5), whereas its respectively other chain lever (13'' or, respectively, 13') is mounted for sliding movement with one degree of freedom essentially with one longitudinal component, the pivot axis (15) and accordingly the axis of the adjustable roller (7') being freely supported.

12. The device as claimed in any one of the claims 8 through 10, characterized in that the toggle lever (13; 13' and 13'') is movingly supported on its two chain levers (13' and 13'') respectively with one degree of freedom essentially with one longitudinal component in the direction of the guide rail (1) on the associated chain carriage (5) in a longitudinally sliding manner and by means of a third support point (15 and 15'), preferably the pivot axis (15), only in one component essentially transversely in relation to the associated support surface (1'') of the guide rail (1) with one degree of freedom.

13. The device as claimed in any one of the claims 2 through 12, characterized in that the support pins (19 and 21) of the toggle lever (13' and 13'') are constituted by pivot pins.

14. The device as claimed in any one of the claims 2 through 13, characterized in that the respectively slidingly mounted chain lever (13' and 13'') is mounted in a rotatable manner in a carriage (23''), preferably by means of a pin, the carriage (23'') being mounted in a longitudinal recess (23') in the associated chain carriage (5) in a sliding fashion.

15. The device as claimed in claim 14, characterized in that the carriage (23'') comprises a sliding shoe.

16. The device as claimed in any one of the claims 8 through 15, characterized in that the pivot axis of the adjustable roller (7') coincides with the pivot axis (15) of the toggle lever (13' and 13'').

17. The device as claimed in any one of the claims 8 through 15, characterized in that the pivot axis (15') of the adjustable roller (7') is offset in relation to the pivot axis (15) of the toggle lever (13; 13' and 13'').

18. The device as claimed in claim 17, characterized by an angled lug (31) formed on a chain lever (13' and 13'') and on which the adjustable roller (7') is supported and held.

19. The device as claimed in claim 18, characterized in that the angled lug (31) and with it the axis of the adjustable roller (7') is nearer to the associated support surface (1'') of the guide rail (1) than the pivot axis (15) of the toggle lever (13; 13' and 13'').

20. The device as claimed in any one of the claims 8 through 19, characterized in that the departure of the angle (α) from 180° is preferably in excess of 0.2° and less than 5° and more particularly more than 0.3°, 0.4° and more especially 0.5° and preferably less than 4°, 3°, 2° and more particularly 1.5° or 1°.

21. The device as claimed in any one of the claims 2 through 20, characterized in that the pivot range of the at least one chain lever (13' and 13'') is limited by an abutment (43), more particularly a damping element, in a direction opposite to the direction of biasing.

22. The device as claimed in any one of the claims 2 through 20, characterized in that the at least one chain lever (13' and 13'') is tensioned in the direction of biasing additionally by means of a spring device (47), provided on the chain carriage (5) in addition toward the support surface (1'').

23. The device as claimed in any one of the claims 2 through 22, characterized in that the acute angle (β) affecting the biasing force, of the at least one chain lever (13' and 13'') and the direction of the support surface (1' and 1'') is able to be preset by a corresponding arrangement of the support aces, of the axis of rotation of the adjustable roller (7') and of the diameter thereof by the configuration and size of the at least one chain lever (13' and 13'') and the thickness of the guide rail(1).

24. The device as claimed in any one of the claims 2 through 23, characterized in that the distance of the support surfaces (1' and 1'') and with them more particularly the thickness of the guide rail (1) and/or the forces pre-tensioning the chains and/or the driving forces of the chain is or, respectively, are able to be varied in order to obtain different roller biasing forces.

25. The device as claimed in any one of the claims 2 through 24, characterized in that in each chain carriage (5) at least two rollers (7'), offset in relation to each other in the direction of running, are able to be adjusted, the respective further adjustable roller (7') being offset separately in the direction of running and being correspondingly provided on the chain carriage (5) or in a sort of tandem arrangement chain connected one behind the other or in a pseudo bilaterally symmetrical chained arrangement one behind the other.

26. The device as claimed in any one of the claims 2 through 25, characterized in that adjacent to a chain wheel (35) between the oppositely cooperating rollers (7 and 7') a guide arc (41) is provided at the transition to the straight guide rail (1) in order to receive and transmit the supporting forces to the chain wheel (35).

## Revendications

1. Dispositif de mise à largeur et de fixage de feuilles minces avec chaîne de transport sans fin (3), composé de chariots à chaîne (5) reliés de manière articulée l'un à l'autre et en appui va un mécanisme de roulement à galets sur un dispositif de guidage comprenant au moins un rail de guidage (1) et pouvant se déplacer le long de celui-ci, ce en quoi au moins un galet (7) roue sur chacune des surfaces de roulement opposées (1', 1'') du dispositif de rail de guidage (1), caractérisé en ceci qu'au moins un de ces galets (7') et, du fait de la disposition flottante du chariot à chaîne, également les galets (7) roulant sur la surface de roulement opposée, sont maintenus, vis-à-vis du chariot à chaîne (5) transversalement par rapport au rail de guidage (1), en contact permanent avec les surfaces de roulement correspondantes respectives (1', 1''), en position modifiable sous prétension continue, ce pour quoi au moins un galet (7') pouvant, sur le chariot à chaîne (5), être principalement ajusté sur la surface de roulement correspondante (1', 1'') ainsi qu'un dispositif de renvoi sont prévus, à l'aide desquels la tension de chaîne agissant essentiellement dans la direction de roulement et influencée par les forces de traction transmises d'un chariot à chaîne (5) au suivant est renvoyée sous forme d'une force de prétension agissant essentiellement transversalement sur la surface de roulement correspondante (1', 1'') et exerçant une pression sur le galet réglable (7').

2. Dispositif suivant revendication 1, caractérisé en ce que le dispositif de renvoi comprend au moins un levier de chaîne articulé (13') fixé sur paliers au chariot à chaîne (5) de manière permettant au moins indirectement le basculement et guidant le galet réglable (7'), les forces de traction agissant sur le levier.

3. Dispositif suivant revendication 2, caractérisé en ce que le minimum un levier de chaîne (13') est fixé au chariot à chaîne (5) sur paliers permettant la rotation et est orienté de manière à former un angle aigu (β) par rapport à la surface de roulement (1', 1''), son axe d'appui (19) étant pris comme axe de rotation.

4. Dispositif suivant revendication 2 ou 3, caractérisé en ce que sur le levier de chaîne (13') agit un organe de liaison et traction (25, 49) décalé par rapport à son axe d'appui et de rotation (19), sur lequel organe une liaison de traction existe au moins indirectement vers un chariot à chaîne (5) voisin précédent ou suivant.

5. Dispositif suivant une des revendications 2 à 4, caractérisé en ce que le minimum un levier de chaîne (13') forme un angle aigu (β) compris entre 0,1° et 10°, de préférence d'au moins 0,2°, 0,3°, 0,4° et en particulier 0,5° et de préférence de moins de 7,5°, 5°, 4°, 3°, 2°, 1,5° ou en particulier 1°, avec la surface de roulement (1', 1'') correspondante.

6. Dispositif suivant une des revendications 2 à 5, caractérisé en ce que le levier de chaîne (13') est maintenu et fixé sur paliers au chariot à chaîne correspondant (5) uniquement via un axe de rotation et de support (19) non translatable.

7. Dispositif suivant une des revendications 2 à 5, caractérisé en ce que le levier de chaîne (13) s'appuie de manière mobile sur le chariot à chaîne (5) correspondant à l'aide de deux axes de support décalés l'un par rapport à l'autre (19, 15), avec respectivement un degré de liberté, comportant d'une part une composante essentiellement longitudinale en direction du rail de guidage (1) et d'autre part une composante essentiellement transversale par rapport à la surface de roulement correspondante (1'') du rail de guidage (1).

8. Dispositif suivant une des revendications 1 à 7, caractérisé en ce que le dispositif de renvoi comprend respectivement au moins deux leviers de chaîne (13', 13'') reliés par une articulation et formant un lever de chaîne coudé (13), sur lequel le galet réglable (7') peut être ajusté.

9. Dispositif suivant revendication 8, caractérisé en ce que le lever coudé (13, 13', 13'') forme en regard de la surface de roulement correspondante (1', 1'') un angle obtus (α) supérieur à 170°, ce en quoi le levier coudé est soumis à traction en direction de son ouverture par les forces de traction transmises,

10. Dispositif suivant revendication 8, caractérisé en ce que le levier coudé (13, 13', 13'') forme en regard de la surface de roulement correspondante (1', 1'') un angle plus qu'obtus (α) inférieur à 190°, ce en quoi le levier coudé est soumis à traction en direction de la ligne de 180° par les forces de traction transmises, ce qui entraîne la mise en prétension du galet réglable (7'), la direction de prétension étant orientée vers le rail de guidage (1).

11. Dispositif suivant une des revendications 8 à 10, caractérisé en ce que le levier coudé (13, 13', 13'') est relié par paliers au chariot à chaîne correspondant (5) avec un des ses deux leviers à chaîne (13', 13'') uniquement à rotation et avec l'autre levier de chaîne (13'' ou 13') de manière translatable avec un degré de liberté ayant essentiellement une composante longitudinale, l'axe de l'articulation (15) et donc l'axe du galet (7') étant en porte-à-faux.

12. Dispositif suivant une des revendications 8 à 10, caractérisé en ce que le levier coudé (13, 13', 13'') s'appuie de manière permettant un déplacement longitudinal sur le chariot à chaîne correspondant (5) par l'intermédiaire de ses deux leviers à chaîne (13', 13'') ayant respectivement un degré de liberté avec essentiellement une composante longitudinale en direction du rail de guidage (1) et de manière mobile par l'intermédiaire d'un troisième point d'appui (15, 15'), de préférence l'axe de l'articulation (15), suivant une seule composante essentiellement transversale par rapport à la surface de roulement correspondante (1'') du raide guidage (1).

13. Dispositif suivant une des revendications 2 à 12, caractérisé en ce que les axes d'appui (19,21) du levier coudé (13', 13'') sont constitués de boulons pivots.

14. Dispositif suivant une des revendications 2 à 13, caractérisé en ce que le lever de chaîne (13', 13'') fixé sur paliers de manière respectivement translatable est fixé à rotation sur paliers dans un chariot (23''), de préférence à l'aide d'un boulon, le chariot (23'') étant fixé dans le chariot à chaîne (5) sur paliers de manière permettant le déplacement longitudinal dans une rainure longitudinale correspondante (23').

15. Dispositif suivant revendication 14, caractérisé en ce que le chariot (23'') comprend un coulisseau.

16. Dispositif suivant une des revendications 8 à 15, caractérisé en ce que l'axe de rotation du galet réglable (7') coïncide avec l'axe de l'articulation (15) du levier coudé (13', 13'').

17. Dispositif suivant une des revendications 2 à 15, caractérisé en ce que l'axe de rotation (15') du galet réglable (7') est décalé par rapport à l'axe de l'articulation (15) du lever coudé (13, 13', 13'').

18. Dispositif suivant revendication 17, caractérisé en ceci qu'à un lever de chaîne (13', 13'') est formée une saillie en équerre (31) qui sert d'appui au galet réglable (7') et le maintient.

19. Dispositif suivant revendication 16, caractérisé en ce que la saillie en équerre (31), et donc l'axe de rotation du galet réglable (7'), est située plus près de la surface de roulement correspondante (1'') du rail de guidage (1) que l'axe de l'articulation (15) du levier coudé (13, 13', 13'').

20. Dispositif suivant une des revendications 8 à 19, caractérisé en ce que l'écart de l'angle (α) par rapport à la ligne de 180° est de préférence supérieur à 0,2° et inférieur à 5°, en particulier supérieur à 0,3°, 0,4° et en particulier inférieur à 4°, 3°, 2° et en particulier 1,5° ou 1°.

21. Dispositif suivant une des revendications 2 à 20, caractérisé en ce que la plage de basculement du minimum un levier de chaîne (13', 13'') est limitée dans le sens opposé à la direction de prétension par une butée (43), en particulier un amortisseur.

22. Dispositif suivant une des revendications 2 à 20, caractérisé en ce que le minimum un levier de chaîne (13', 13'') est en outre tendu vers la surface de roulement (1'') dans la direction de prétension via un dispositif à ressort (47) prévu au chariot à chaîne (5).

23. Dispositif suivant une des revendications 2 à 22, caractérisé en ce que l'angle aigu (β) influençant les forces de prétension formé par la direction d'un des leviers à chaîne (13', 13'') et la direction de la surface de roulement (1', 1'') peut être préréglé par disposition appropriée des axes d'appui, de l'axe de rotation du galet réglable (7') de même que leur diamètre peut l'être par la forme et la grandeur du minimum un lever de chaîne (13', 13'') ainsi que par l'épaisseur du raide guidage (1).

24. Dispositif suivant une des revendications 1 à 23, caractérisé en ce que la distance entre les surfaces de roulement (1', 1'') et par là en particulier l'épaisseur du raide guidage (1) et/ou les forces de prétension de la chaîne et/ou les forces d'entraînement de la chaîne pour l'obtention de différentes forces de prétension des galets est ou sont variables.

25. Dispositif suivant une des revendications 1 à 24, caractérisé en ce que dans chaque chariot à chaîne (5) au moins deux galets (7') également décalés l'un par rapport à l'autre dans la direction de roulement sont réglables, le galet réglable respectivement le plus éloigné étant décalé séparément dans la direction de roulement et étant prévu au chariot à chaîne (5) dans une sorte de disposition en tandem en enchaînement l'un derrière l'autre ou en enchaînement l'un derrière l'autre inversée (miroir).

26. Dispositif suivant une des revendications 1 à 25, caractérisé en ceci qu'à proximité d'une roue de chaîne (35) un coude de guidage flottant (41), translatable à la transition vers le rail droit de guidage (1), est prévu entre les galets opposés (7, 7') pour réception des forces d'appui et transmission à la roue de chaîne (35).
